# EUROPÄISCHE PATENTSCHRIFT

(11) **EP 1 186 165 B1**
(45) Veröffentlichungstag und Bekanntmachung des Hinweises auf die Patenterteilung: **22.01.2003**
(21) Anmeldenummer: 00954284.6
(22) Anmeldetag: 19.06.2000
(51) Int. Cl.: H04N 5/907

(54) **BILDDATEN-SPEICHERVORRICHTUNG**
IMAGE DATA STORAGE DEVICE
DISPOSITIF DE SAUVEGARDE DE DONNEES D'IMAGE

(30) Priorität: 21.06.1999 DE 19928258
(43) Veröffentlichungstag der Anmeldung: 13.03.2002
(73) Patentinhaber: Infineon Technologies AG, 81669 München (DE)
(72) Erfinder: SCHEFFLER, Günter, D-80939 München (DE)
(74) Vertreter: Banzer, Hans-Jörg, Dipl.-Ing.
(86) Internationale Anmeldenummer: DE0002011
(87) Internationale Veröffentlichungsnummer: WO00079793

(56) Entgegenhaltungen:
- EP-A- 0 594 241
- US-A- 5 731 852
- US-A- 5 854 635

## Beschreibung

Die vorliegende Erfindung betrifft eine universell einsetzbare Bilddaten-Speichervorrichtung.

Bildspeicher werden zunehmend bei der Videosignalverarbeitung eingesetzt, um komplexe Bildverarbeitungsalgorithmen, wie z.B. eine 100Hz-Wandlung, eine Bewegungsvektorschätzung oder eine MPEG-Verarbeitung (Moving Pictures Experts Group), durchführen zu können. Zu diesem Zweck sind herkömmlicherweise für die einzelnen Bildverarbeitungsalgorithmen separate Bildspeicher-Bausteine mit getrennten Steuerungen und getrennten Speicherpfaden vorgesehen. Häufig liegen jedoch gleichzeitig Bilddaten einer Vielzahl von zueinander asynchronen Bilddatenkanälen vor è(beispielsweise bei Picture-In-Picture(PIP)-Anwendungen), so daß in diesem Fall bei Anwendung der herkömmlichen Technik ein entsprechend hoher Hardwareaufwand erforderlich ist, um die Bilddaten sämtlicher Bilddatenkanäle speichern und verarbeiten zu können.

EP-A-0 594 241 offenbart eine Bilddaten-Speichervorrichtung mit Merkmalen, die dem einleitenden Teil von Anspruch 1 entsprechen.

Der vorliegenden Erfindung liegt daher die Aufgabe zugrunde, eine universell einsetzbare Bilddaten-Speichervorrichtung bereitzustellen, welche das Speichern und Auslesen von Bilddaten verschiedener Eingangskanäle oder Bilddatenquellen ermöglicht, wobei insbesondere asynchrone Signale mit geringem Aufwand speicherbar bzw. auslesbar sein sollen.

Diese Aufgabe wird erfindungsgemäß durch eine Bilddaten-Speichervorrichtung mit den Merkmalen des Anspruches 1 gelöst. Die Unteransprüche definieren bevorzugte und vorteilhafte Ausführungsformen der vorliegenden Erfindung.

Die vorliegende Erfindung betrifft eine Bilddaten-Speichervorrichtung mit einem zentralen Bilddatenspeicher zum Speichern von Bilddaten mehrerer mit dem Bilddatenspeicher verbundener Bilddaten-Eingangskanäle, wobei der zentrale Bilddatenspeicher zudem mit mehreren Bilddaten-Ausgangskanälen zum Auslesen und Ausgeben von gespeicherten Bilddaten für unterschiedliche Weiterverarbeitungen der ausgelesenen Bilddaten verbunden ist. Dem zentralen Bilddatenspeicher ist eine Speichersteuerung zugeordnet, welche die einzelnen Speicher- und Auslesevorgänge koordiniert, so daß alle erforderlichen Speichervorgänge, d.h. das Schreiben von Bilddaten verschiedener Eingangskanäle und das Auslesen beliebiger Bilddaten über verschiedene Ausgangskanäle, möglich sind. Hierzu wird die hohe Speicherbandbreite von heutzutage verfügbaren Speicherbausteinen ausgenützt. Alle Eingangs- und Ausgangskanäle können asynchron sein. Dies betrifft sowohl die jedem Bilddatenkanal zugeordneten Synchronisationssignale als auch die zugehörigen Abtasttakte bezüglich deren Frequenz und Phase.

Bei der Ausgestaltung der erfindungsgemäßen Bilddaten-Speichervorrichtung wird berücksichtigt, daß sowohl am Eingang als auch am Ausgang kontinuierliche Bilddatenströme geschrieben bzw. gelesen werden müssen. Hierzu werden entsprechende Maßnahmen in den Eingangs- und Ausgangskanälen der Bilddaten-Speichervorrichtung vorgeschlagen.

Vorzugsweise werden die einzelnen Speicher- und Auslesevorgänge von der Speichersteuerung gemäß einem bestimmten Prioritätsschema abgearbeitet. Sämtliche Eingangsund Ausgangskanäle können über einen gemeinsamen Speicherbus mit dem zentralen Bilddatenspeicher verbunden sein, wobei über den Speicherbus Bilddaten von den Eingangskanälen zu dem zentralen Bilddatenspeicher bzw. von dem zentralen Bilddatenspeicher zu den Ausgangskanälen übertragen werden. Die Speichersteuerung greift auf den zentralen Bilddatenspeicher zur Adressierung und Steuerung zu.

Als zentraler Bilddatenspeicher können preisgünstige Standardspeicher, wie z.B. SDRAMs oder eDRAMs (embedded DRAMs), verwendet werden. Die erfindungsgemäße Bilddaten-Speichervorrichtung stellt ein aufwandoptimiertes System für alle im System erforderlichen Speicher dar und kann leicht durch Anfügen oder Weglassen einzelner Eingangs- oder Ausgangskanäle konfiguriert werden. Kleinere Speichereinheiten, wie z.B. Zeilenspeicher, lassen sich leicht durch Hinzufügen eines weiteren Kanals implementieren.

Vorteilhafterweise sind jedem Eingangs- oder Ausgangskanal Steuer- oder Aktivierungssignale zugeordnet, welche eine leichte Ansteuerung der Bilddaten-Speichervorrichtung durch entsprechende periphere Verarbeitungsblöcke ermöglichen.

Da erfindungsgemäß vorteilhafterweise asynchrone Eingangsund Ausgangskanäle unterstützt werden, können aufwendige Bildverarbeitungsalgorithmen, wie z.B. eine sogenannte Universal Scan Rate Conversion (SRC) mit einer Umsetzung von dem '50Hz interlaced'-Modus in den '60Hz progressive'-Modus, leichter realisiert werden. Darüber hinaus ist eine Synchronisierung von asynchronen Bildquellen oder Eingangskanälen sehr einfach möglich, was beispielsweise insbesondere bei der gleichzeitigen Darstellung mehrerer bewegter Bilder erforderlich ist (Multi-PIP-Darstellung).

Die Erfindung wird nachfolgend anhand bevorzugter Ausführungsformen unter Bezugnahme auf die beigefügte Zeichnung näher erläutert.
Fig. 1 zeigt ein schematisches Blockschaltbild des grundsätzlichen Aufbaus einer erfindungsgemäßen Bilddaten-Speichervorrichtung,
Fig. 2A bzw. 2B zeigt den Aufbau eines in Fig. 1 gezeigten Eingangskanals bzw. Ausgangskanals gemäß einem bevorzugten Ausführngsbeispiel der vorliegenden Erfindung, und
Fig. 3 zeigt den Aufbau der in Fig. 1 gezeigten Speichersteuerung gemäß einem weiteren bevorzugten Ausführungsbeispiel der vorliegenden Erfindung.

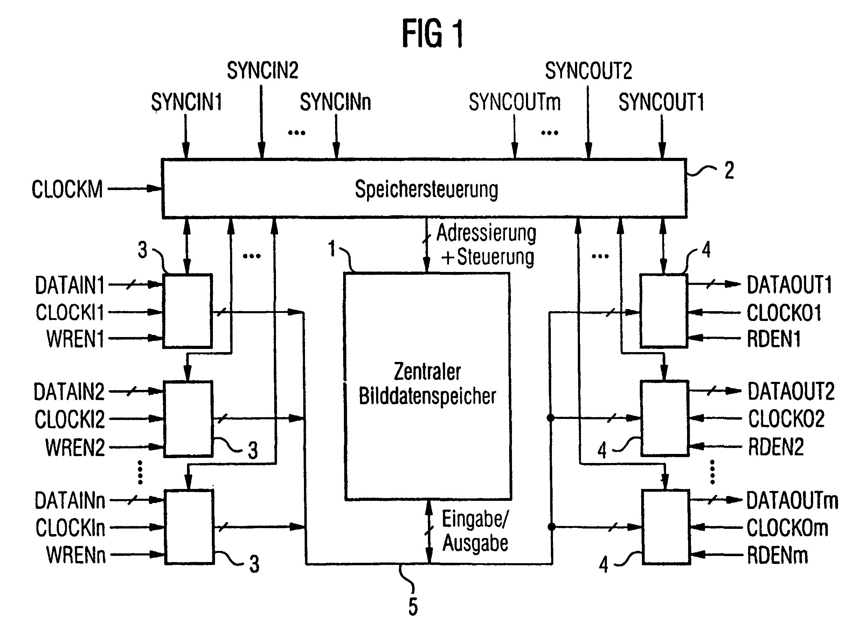

Wie in Fig. 1 angedeutet ist, umfaßt die erfindungsgemäße Bilddaten-Speichervorrichtung einen zentralen Bilddatenspeicher 1, der von einer entsprechenden Speichersteuerung 2 angesteuert wird. Mit dem zentralen Bilddatenspeicher 1 sind vorzugsweise über einen gemeinsamen Speicherbus 5 mehrere Eingangskanäle 3 und mehrere Ausgangskanäle 4 verbunden, so daß in den Bilddatenspeicher 1 Bilddaten verschiedener Quellen geschrieben und aus dem Bilddatenspeicher 3 Bilddaten für unterschiedliche Anwendungen oder Verarbeitungen ausgelesen und ausgegeben werden können. Sämtliche Eingangs- und Ausgangskanäle können zueinander asynchron sein, d.h. den einzelnen Kanälen 3 und 4 können bzgl. ihrer Frequenz und/oder Phase asynchrone Synchronisationssignale SYNCIN bzw. SYNCOUT und Taktsignale CLOCKI/CLOCKO zugeordnet sein.

Der zentrale Bilddatenspeicher 1 kann beispielsweise aus einem oder mehreren SDRAM-Speicherbausteinen bestehen. Ebenso kann er aus sogenannten embedded DRAM- oder eDRAM-Speicherbausteinen aufgebaut sein, wobei diese Lösung besonders vorteilhaft ist, da einerseits die Speicherkapazität durch die Anzahl der eingesetzten Speicherbausteine und andererseits gleichzeitig die Speicherbandbreite durch Variation der Breite des Datenbusses 5 den jeweiligen Anforderungen leicht angepaßt werden kann.

Bei der Ausgestaltung der in Fig. 1 gezeigten Bilddaten-Speichervorrichtung muß berücksichtigt werden, daß sowohl am Eingang als auch am Ausgang der Bilddaten-Speichervorrichtung kontinuerliche Bilddatenströme DATAIN/DATAOUT geschrieben bzw. gelesen werden müssen. Im Gegensatz zu beispielsweise einem Computerspeicher kann ein Bilddatenstrom bei der Echtzeit-Bildverarbeitung nicht beliebig angehalten werden, wenn an einer Stelle im System ein Kapazitätsengpaß auftritt, da bei der Echtzeit-Bildverarbeitung eine sofortige Darstellung der verarbeiteten Bilder auf einem Bildschirm oder Monitor möglich sein muß. Zu diesem Zweck muß auch die Speicherbandbreite an den Ein- und Ausgängen so groß sein, daß selbst bei einem maximal möglichen Datentransfer von und zu dem Bilddatenspeicher 1 jeder Eingang 3 und Ausgang 4 kontinuierlich bedient werden kann.

Wie bereits erwähnt worden ist, ist jedem Eingangskanal 3 ein Bilddatenstrom DATAIN, ein Taktsignal CLOCKI, ein den Bildund Zeilenanfang markierendes Synchronisationssignal SYNCIN und ein Schreib-Aktivierungssignal WREN, welches gültig einzuschreibene Bilddaten kennzeichnet, zugeordnet. Entsprechend ist jedem Ausgangskanal 4 ein Bilddatenstrom DATAOUT, ein Taktsignal CLOCKO, ein Synchronisatiosnsignal SYNCOUT und ein Lese-Aktivierungssignal RDEN, mit dem von den nachfolgenden Blöcken die gewünschten Daten angefordert werden können, zugeordnet. Das Schreiben und Auslesen von Bilddaten erfolgt über den gemeinsamen Speicher- oder Bilddatenbus 5, wobei die Speichersteuerung 1 zur Adressierung und Ansteuerung des zentralen Bilddatenspeichers 1 auf diesen zugreift.

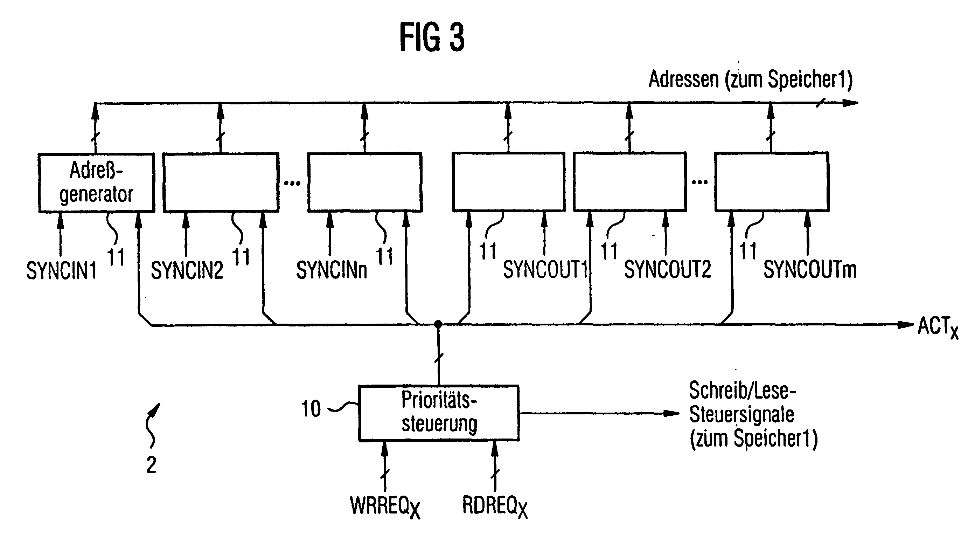

Zur Adressierung ist vorzugsweise jedem Eingangs- und Ausgangskanal 3 bzw. 4 ein beliebiger Adreßbereich im Bilddatenspeicher 1 zugeordnet, in den Bilddaten geschrieben bzw. aus den Bilddaten ausgelesen werden können. Dieser kanalspezifische Adreßbereich wird von einem Adreßgenerator der Speichersteuerung 2 im allgemeinen beginnend mit einer Startadresse linear bis hin zu einer Maximaladresse durchlaufen. Wie in Fig. 3 gezeigt ist, ist hierzu im allgemeinsten Fall jedem Kanal 3 bzw. 4 ein eigener Adreßgenerator 11 zugewiesen.

Durch Definition zusätzlicher Steuersignale und Parameter der Speichersteuerung 2 kann die Abfolge der von den einzelnen Adreßgeneratoren 11 erzeugten Adressen beliebig manipuliert werden, so daß beispielsweise nur die Beschreibung oder das Lesen eines Teils des Speicherbereichs des Bilddatenspeichers 1 möglich ist, um z.B. ein verkleinertes Bild in ein Hauptbild 'einzustanzen' oder nur einen Teil des Gesamtbilds auszulesen. Dies kann beispielsweise dadurch realisiert werden, daß für die Speichersteuerung die variablen Parameter 'Position innerhalb einer Zeile', 'Anzahl der Pixel' und 'Anzahl der Zeilen' definiert werden. Beim Auslesen ist für verschiedene Bildverarbeitungsalgorithmen das Überspringen einer oder mehrerer Zeilen oder auch die Wiederholung einer oder mehrerer Zeilen erforderlich. Zu diesem Zweck kann jeweils ein an die Speichersteuerung anzulegendes Steuersignal definiert werden, welches bewirkt, daß die Adresse am Zeilenanfang entsprechend weitergeschaltet bzw. wiederholt wird.

Die jedem Eingangs- oder Ausgangskanal zugeordneten Synchronisationssignale SYNCIN bzw. SYNCOUT sind der Speichersteuerung 2 bzw. den einzelnen Adreßgeneratoren 11 zugeführt, um am Anfang eines geschriebenen bzw. gelesenen Bildes oder einer Bildzeile den zugehörigen Adreßgenerator 11 auf eine definierte Anfangsadresse zu setzen.

Neben der Erzeugung der Speicheradressen und Steuersignale für den zentralen Bilddatenspeicher 1 ist es eine weitere wesentliche Aufgabe der Speichersteuerung 2, sämtliche Speicherzugriffe der Eingangs- und Ausgangskanäle 3 bzw. 4 zu koordinieren. Diese Aufgabe übernimmt die in Fig. 3 gezeigte Prioritätssteuerung 10, welche sämtliche Schreib-Anforderungssignale WREQ der Eingangskanäle 3 und Lese-Anforderungssignale RDREQ der Ausgangskanäle 4 sammelt und nach bestimmten Kriterien in eine Liste oder Warteschlange einträgt, welche die Reihenfolge ihrer Abarbeitung angibt. Diese Liste wird mit jedem neu eintreffenden Anforderungssignal und jeder abgearbeiteten Anforderung aktualisiert. Das von der Prioritätssteuerung 10 befolgte Prioritätsschema kann beispielsweise derart sein, daß einem mit einer hohen Taktfrequenz arbeitenden Kanal eine hohe Priorität und einem mit einer geringen Taktfrequenz arbeitenden Kanal eine geringe Priorität zugewiesen wird.

Sobald eine Anforderung eines Eingangs- oder Ausgangskanals an oberster Position in der zuvor erwähnten Abarbeitungsliste auftaucht, wird von der Prioritätssteuerung 10 ein Aktivierungssignal ACT erzeugt und an den entsprechenden Kanal übertragen, um den der abzuarbeitenden Anforderung zugehörigen Datentransfer einzuleiten. Auf diese Weise wird diesem Kanal ein Zeitschlitz für den Datentransfer zugewiesen. Des weiteren wird von dem Adreßgenerator 11 dieses Kanals eine Adresse für den Zugriff auf den Bilddatenspeicher 1 generiert und die erforderlichen Steuersignale für den Speicherzugriff erzeugt. Das Aktivierungssignal ACT kann gleichzeitig zum Inkrementieren der Adresse verwendet werden. Nach Beendigung eines Speicherzugriffs wird von der Prioritätssteuerung 10 der Speichersteuerung 2 sofort der nächste Datentransfer eingeleitet, indem das Aktivierungssignal ACT für den in der Abarbeitungsliste nunmehr an erster Stelle stehenden Kanal erzeugt wird. Somit wird eine lückenlose Aneinanderreihung sämtlicher Speicherzugriffe und eine optimale Ausnutzung der zur Verfügung stehenden Speicherbandbreite erreicht.

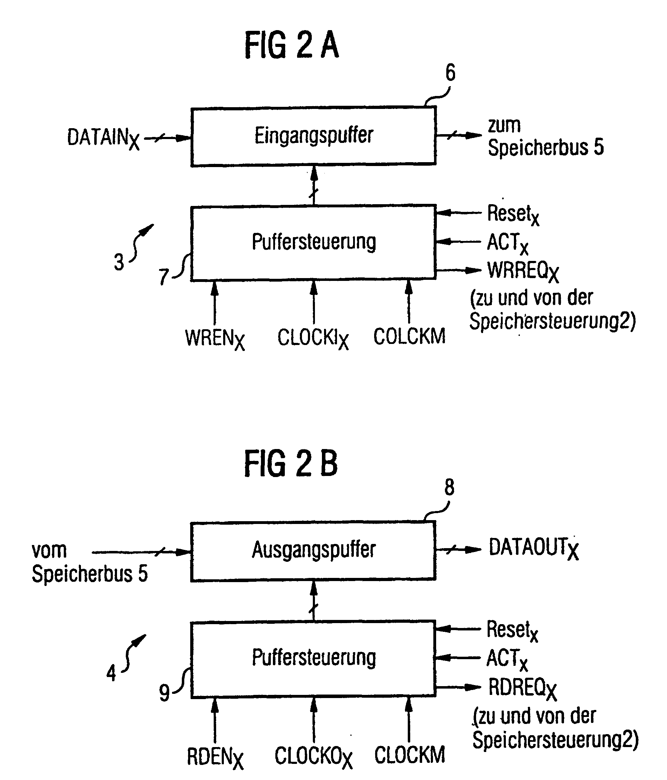

Um die Datenrate des Bilddatenspeichers 2 möglichst gut auszunutzen, werden bei einem Speicherzugriff vorzugsweise mehrere aufeinanderfolgende Adressen beschrieben oder gelesen (sogenannter Page Modus). Zu diesem Zweck ist in jedem Eingangskanal 3 und Ausgangskanal 4 ein Zwischenspeicher erforderlich. Der Aufbau eines Eingangskanals 3 ist in Fig. 2A dargestellt, während der Aufbau eines Ausgangskanals 4 in Fig. 2B dargestellt ist.

Wie der Darstellung von Fig. 2A entnommen werden kann, enthält jeder Eingangskanal 3 einen Eingangspuffer 6, dem die entsprechenden Bilddaten DATAIN kontinuierlich zugeführt werden. In dem Eingangspuffer 6 werden die eingehenden Bilddaten gesammelt, bis soviele Bildaten vorhanden sind, um einen Speichertransfer durchführen zu können. Ist dieser Füllstand erreicht, erzeugt eine entsprechende Puffersteuerung 7 eine Schreib-Anforderung WRREQ, welche von der in Fig. 3 gezeigten Prioritätssteuerung 10 in die Abarbeitungsliste eingereiht und abgearbeitet wird. Umgekehrt kann jederzeit von der Speichersteuerung 2 der Puffersteuerung ein Rücksetzsignal Reset zugeführt werden.

Auch jeder Ausgangskanal 4 enthält einen Pufferspeicher 8 sowie eine Puffersteuerung 9. In den Ausgangspuffer 8 werden die zu einem Lesevorgang gehörenden und aus dem Bilddatenspeicher 1 ausgelesenen Bilddaten zwischengespeichert und langsam ausgelesen, um einen kontinuierlichen Ausgangsdatenstrom DATAOUT zu gewährleisten. Ist der Ausgangspuffer 8 soweit geleert, daß wieder neue Bilddaten aus dem Hauptspeicher 1 aufgenommen werden können, wird von der zugehörigen Puffersteuerung 9 eine entsprechende Lese-Anforderung RDREQ erzeugt und an die Speichersteuerüng 2 bzw. die darin enthaltene Prioritätssteuerung 10 übermittelt.

Die Kapazität der Zwischenspeicher 6 und 8 muß jeweils größer als diejenige Datenmenge sein, welche bei einem Datentransfer übertragen wird, da im allgemeinen weder eine Schreib-Anforderung WRREQ noch eine Lese-Anforderung RDREQ sofort erfüllt werden kann. Daher muß jeder Eingangskanal 3 bzw. Eingangspuffer 6 in der Lage sein, die während dieser Wartezeit eingehenden Bilddaten zwischenzuspeichern. Umgekehrt muß jeder Ausgangskanal 4 bzw. Ausgangspuffer 8 auch während dieser Wartezeit Bilddaten bereitstellen können, damit nach außen ein ununterbrochener Bilddatenstrom gewährleistet ist.

Neben den zuvor beschriebenen Aufgaben führen die Zwischenspeicher 6 und 8 zudem eine Umsetzung der Wortbreite durch, um die Wortbreite des Eingangskanals 3 bzw. des Ausgangskanals 4 an diejenige des Speicherbusses 5 anzupassen. Beträgt die Wortbreite des Eingangskanals 3 beispielsweise 8 Bit und die des Speicherbusses 5 beispielsweise 64 Bit, werden acht Abtastwerte zu einem 64 Bit-Wort zusammengefaßt, welche ausgehend von dem Zwischenspeicher 6 über den Speicherbus 5 an den zentralen Bilddatenspeicher 1 übertragen wird. Im Ausgangskanal 4 wird die Anpassung entsprechend umgekehrt vorgenommen.

Bei den Zwischenspeichern 6 und 8 treffen jeweils zwei unterschiedliche Taktsysteme aufeinander. Der zentrale Bilddatenspeicher 1 arbeitet mit dem Speichertakt CLOCKM. Die Eingangspuffer 6 werden daher mit dem kanalspezifischen Takt CLOCKI geschrieben und mit CLOCKM ausgelesen, während die Ausgangspuffer 8 mit CLOCKM beschrieben und mit CLOCKO gelesen werden. Derartige Puffer oder Zwischenspeicher lassen sich beispielsweise mit Registerketten oder SRAM-Bausteinen realisieren. Die einzelnen Takte CLOCKI, CLOCKM und CLOCKO können unterschiedliche Frequenzen und Phasenlagen aufweisen.

Wie bereits erwähnt worden ist, legt die Speichersteuerung 2 die Reihenfolge der Abarbeitung von Anforderungen der Eingangs- und Ausgangskanäle entsprechend vorgegebener Prioritäten fest. Andererseits muß die Speichersteuerung 2 auch darauf achten, daß jeder Kanal 3 oder 4 innerhalb eines individuell definierten Zeitraums bedient wird, damit der Bilddatenfluß nicht unzulässig unterbrochen wird. Dieser Zeitraum hängt von der Taktrate und von der Größe der jedem Kanal 3 bzw. 4 zugeordneten Zwischenspeichers 6 bzw. 8 ab. Allgemein ist die gesamte Bilddaten-Speichervorrichtung so zu dimensionieren, daß stets die rechtzeitige Erfüllung aller Schreib- oder Lese-Anforderungen gewährleistet ist, damit auf allen Kanälen 3 oder 4 die gewünschte Pixel- oder Bilddatenfolge sichergestellt ist. Dazu müssen die Datenraten aller Kanäle aufaddiert werden und mit der erreichbaren Datenrate des zentralen Bilddatenspeichers 1 unter Berücksichtigung aller Adressierungen in Einklang gebracht werden. Das System kann hinsichtlich der gewünschten Kriterien insbesondere durch eine geeignete Wahl der Parameter 'Taktfrequenz CLOCKM des Bilddatenspeichers 1', 'Größe der Zwischenspeicher 6 und 8', 'Anzahl der aufeinanderfolgenden Speicherzugriffe (Page Mode-Zyklen)' und 'Breite des Speicherbusses 5' optimiert werden.

## Patentansprüche

1. Bilddaten-Speichervorrichtung,
mit einem zentralen Bilddatenspeicher (1) zum Speichern von Bilddaten (DATAIN) mehrerer mit dem Bilddatenspeicher (1) verbundener Bilddaten-Eingangskanäle (3), wobei der Bilddatenspeicher (1) zudem mit mehreren Bilddaten-Ausgangskanälen (4) zum Auslesen und Ausgeben von gespeicherten Bilddaten für eine weitere Verarbeitung der ausgegebenen Bilddaten (DATAOUT) verbunden ist, und mit Speichersteuermitteln (2) zur Koordinierung der einzelnen Speichervorgänge der Bilddaten-Eingangskanäle (3) und der einzelnen Auslesevorgänge der Bilddaten-Ausgangskanäle (4),
**dadurch gekennzeichnet,**
**daß** jedem Bilddaten-Eingangskanal (3) und jedem Bilddaten-Ausgangskanal (4) ein eigener Synchronisationssignal (SYNCIN; SYNCOUT) zugeordnet ist, wobei die einzelnen Synchronisationssignale (SYNCIN; SYNCOUT) den Speichersteuermitteln (2) zugeführt sind, und
**daß** die Speichersteuermittel (2) die Koordination zwischen den einzelnen Speichervorgängen der Bilddaten-Eingangskanäle (3) und den einzelnen Ausgabevorgänge der Bilddaten-Ausgangskanäle (4) unter Berücksichtigung der entsprechenden Synchronisationssignale (SYNCIN; SYNCOUT) durchführen.

2. Bilddaten-Speichervorrichtung nach Anspruch 1,
**dadurch gekennzeichnet,**
**daß** der zentrale Bilddatenspeicher (1) ein SDRAM-Speicher ist.

3. Bilddaten-Speichervorrichtung nach Anspruch 1,
**dadurch gekennzeichnet,**
**daß** der zentrale Bilddatenspeicher (1) ein eDRAM-Speicher ist.

4. Bilddaten-Speichervorrichtung nach einem der vorhergehenden Ansprüche,
**dadurch gekennzeichnet,**
**daß** die Speichersteuermittel (2) bei Vorliegen von Anforderungssignalen (WRREQ; RDREQ) der einzelnen Eingangs- bzw. Ausgangskanäle (3; 4) zum Speichern bzw. zum Auslesen entsprechender Bilddaten diese Anforderungen gemäß einem bestimmten Prioritätsschema koordinieren und verarbeiten.

5. Bilddaten-Speichervorrichtung nach Anspruch 4,
**dadurch gekennzeichnet,**
**daß** jeder Eingangskanal (3) einen Eingangskanal-Zwischenspeicher (6) umfaßt, der eingangsseitig die Bilddaten (DATAIN) des entsprechenden Eingangskanals (3) empfängt und zwischenspeichert und ausgangsseitig mit dem Bilddatenspeicher (1) verbunden ist, und
**daß** jedem Eingangskanal-Zwischenspeicher (6) Eingangskanal-Steuermittel (7) zugeordnet sind, welche ein Speicher-Anforderungssignal (WRREQ) für die Speichersteuermittel (2) erzeugen, wenn in dem entsprechenden Eingangskanal-Zwischenspeicher (6) eine bestimmte Bilddatenmenge gespeichert ist.

6. Bilddaten-Speichervorrichtung nach Anspruch 4 oder 5,
**dadurch gekennzeichnet,**
**daß** jeder Ausgangskanal (4) einen Ausgangskanal-Zwischenspeicher (8) umfaßt, der eingangsseitig mit dem Bilddatenspeicher (1) verbunden ist und die von dem Bilddatenspeicher (1) empfange Bilddaten (DATAOUT) des entsprechenden Ausgangskanals (4) zwischenspeichert, und
**daß** jedem Ausgangskanal-Zwischenspeicher (8) Ausgangskanal-Steuermittel (9) zugeordnet sind, welche ein Auslese-Anforderungssignal (RDREQ) für die Speichersteuermittel (2) erzeugen, wenn der entsprechende Ausgangskanalzwischenspeicher (9) eine bestimmte freie Speicherkapazität besitzt.

7. Bilddaten-Speichervorrichtung nach einem der vorhergehenden Ansprüche,
**dadurch gekennzeichnet,**
**daß** jedem Bilddaten-Eingangskanal (3) und jedem Bilddaten-Ausgangskanal (4) ein bestimmter Adreßbereich in dem zentralen Bilddatenspeicher (1) zugeordnet ist.

8. Bilddaten-Speichervorrichtung nach Anspruch 7 und Anspruch 5 oder 6,
**dadurch gekennzeichnet,**
**daß** die Speichersteuermittel (2) Adreßgeneratormittel (11) zur Erzeugung von kanalspezifischen Adreßsignalen umfassen, und
**daß** die Speichersteuermittel (2) für jede gemäß dem bestimmten Prioritätsschema augenblicklich zu verarbeitende Anforderung ein Aktivierungssignal (ACT) für den entsprechenden Eingangs- bzw. Ausgangskanal (3; 4) zur Durchführung des entsprechenden Speicher- oder Auslesevorgangs erzeugt und die Adreßgeneratormittel (11) zur Erzeugung eines entsprechenden Adreßsignals für den Bilddatenspeicher (1) anweist.

9. Bilddaten-Speichervorrichtung nach Anspruch 8,
**dadurch gekennzeichnet,**
**daß** die Adreßgeneratormittel für jeden Eingangs- und Ausgangskanal (3; 4) einen eigenen Adreßgenerator (11) umfassen, und
**daß** an jeden Adreßgenerator (11) das Synchronisationssignal des entsprechenden Eingangs- oder Ausgangskanals (3; 4) angelegt ist, wobei jeder Adreßgenerator (11) synchron mit dem an ihn angelegten Synchronisationssignal auf eine bestimmte Anfangsadresse des Bilddatenspeichers (1) gesetzt wird.

10. Bilddaten-Speichervorrichtung nach Anspruch 8 oder 9,
**dadurch gekennzeichnet,**
**daß** die Erzeugung der Adreßsignale durch die Adreßgeneratormittel (11) mit Hilfe entsprechender Steuersignale und/oder mit Hilfe einer entsprechenden Parametrierung manipulierbar ist.

11. Bilddaten-Speichervorrichtung nach einem der Ansprüche 8-10,
**dadurch gekennzeichnet,**
**daß** die Eingangs kanal-Steuermittel (7) derart ausgestaltet sind, daß sie bei Vorliegen eines entsprechenden Aktivierungssignals (ACT) von der Speichersteuerung (2) das Speichern einer in dem entsprechenden Eingangskanal-Zwischenspeicher (6) gespeicherten Bilddatenmenge in den Bilddatenspeicher (1) veranlassen, und
**daß** die Ausgangskanal-Steuermittel (8) derart ausgestaltet sind, daß sie bei Vorliegen eines entsprechenden Aktivierungssignals (ACT) von der Speichersteuerung (2) das Auslesen einer bestimmten Bilddatenmenge aus dem Bilddatenspeicher (1) und das Speichern dieser Bilddatenmenge in dem entsprechenden Ausgangskanal-Zwischenspeicher (9) veranlassen.

12. Bilddaten-Speichervorrichtung nach Anspruch 11,
**dadurch gekennzeichnet,**
**daß** die Kapazität jedes Eingangskanal-Zwischenspeichers (6) und jedes Ausgangskanal-Zwischenspeichers (9) größer als die pro Speicher- oder Auslesevorgang übertragene Bilddatenmenge ist.

13. Bilddaten-Speichervorrichtung nach einem der Ansprüche 8-12,
**dadurch gekennzeichnet,**
**daß** die Eingangs kanal-Zwischenspeicher (6) und die Ausgangskanal-Zwischenspeicher (8) jeweils durch eine Registerkette oder einen SRAM-Speicher gebildet sind.

14. Bilddaten-Speichervorrichtung nach einem der Ansprüche 8-13,
**dadurch gekennzeichnet,**
**daß** die Eingangskanal-Zwischenspeicher (6) und die Ausgangskanal-Zwischenspeicher (8) über einen gemeinsamen Bus (5) mit dem Bilddatenspeicher (1) verbunden sind.

15. Bilddaten-Speichervorrichtung nach einem der vorhergehenden Ansprüche,
**dadurch gekennzeichnet,**
**daß** wenigstens zwei der Eingangs- und/oder Ausgangskanäle (3; 4) zueinander asynchron sind.

## Claims

1. A picture data memory device,
having a central picture data memory (1) for storing picture data (DATAIN) of a plurality of picture data input channels (3) connected to the picture data memory (1), the picture data memory (1) additionally being connected to a plurality of picture data output channels (4) for reading out and outputting stored picture data for further processing of the output picture data (DATAOUT), and
having memory control means (2) for coordinating the individual storage operations of the picture data input channels (3) and the individual read-out operations of the picture data output channels (4), **characterized in that** each picture data input channel (3) and each picture data output channel (4) are assigned an own synchronization signal (SYNCIN; SYNCOUT), the individual synchronization signals (SYNCIN; SYNCOUT) being fed to the memory control means (2), and
**in that** the memory control means (2) carry out coordination between the individual storage operations of the picture data input channels (3) and the individual output operations of the picture data output channels (4) taking account of the corresponding synchronization signals (SYNCIN; SYNCOUT).

2. The picture data memory device as claimed in claim 1,
**characterized**
**in that** the central picture data memory (1) is an SDRAM memory.

3. The picture data memory device as claimed in claim 1,
**characterized**
**in that** the central picture data memory (1) is an eDRAM memory.

4. The picture data memory device as claimed in one of the preceding claims,
**characterized**
**in that**, in the presence of request signals, (WRREQ; RDREQ) of the individual input and/or output channels (3; 4) for storing and/or for reading out corresponding picture data, the memory control means (2) co-ordinate and process these requests in accordance with a specific priority scheme.

5. The picture data memory device as claimed in claim 4,
**characterized**
**in that** each input channel (3) comprises an input channel buffer memory (6) which, on the input side, receives and buffer-stores the picture data (DATAIN) of the corresponding input channel (3) and, on the output side, is connected to the picture data memory (1), and
**in that** each input channel buffer memory (6) is assigned input channel control means (7) which generate a storage request signal (WRREQ) for the memory control means (2) if a specific volume of picture data is stored in the corresponding input channel buffer memory (6).

6. The picture data memory device as claimed in claim 4 or 5,
**characterized**
**in that** each output channel (4) comprises an output channel buffer memory (8) which, on the input side, is connected to the picture data memory (1) and buffer-stores the picture data (DATAOUT) of the corresponding output channel (4) which are received from the picture data memory (1),
and **in that** each output channel buffer memory (8) is assigned output channel control means (9) which generate a read-out request signal (RDREQ) for the memory control means (2) if the corresponding output channel buffer memory (9) has a specific free storage capacity.

7. The picture data memory device as claimed in one of the preceding claims,
**characterized**
**in that** each picture data input channel (3) and each picture data output channel (4) are assigned a specific address range in the central picture data memory (1).

8. The picture data memory device as claimed in claims 7 and claim 5 or 6,
**characterized**
**in that** the memory control means (2) comprise address generator means (11) for generating channel-specific address signals, and
**in that** the memory control means (2), for each request that is currently to be processed in accordance with the specific priority scheme, generates an activation signal (ACT) for the corresponding input or output channel (3; 4) for carrying out the corresponding storage or read-out operation and instructs the address generator means (11) for generating a corresponding address signal for the picture data memory (1).

9. The picture data memory device as claimed in claim 8,
**characterized**
**in that** the address generator means comprise a dedicated address generator (11) for each input and output channel (3; 4), and
**in that** the synchronization signal of the corresponding input or output channel (3; 4) is applied to each address generator (11), each address generator (11) being set to a specific start address of the picture data memory (1) synchronously with the synchronization signal applied to said address generator.

10. The picture data memory device as claimed in claims 8 or 9,
**characterized**
**in that** the generation of the address signals by the address generator means (1) can be manipulated with the aid of corresponding control signals and/or with the aid of corresponding parameterization.

11. The picture data memory device as claimed in one of claims 8-10,
**characterized**
**in that** the input channel control means (7) are configured in such a way that, in the presence of a corresponding activation signal (ACT) from the memory controller (2), they initiate the storage, in the picture data memory (1), of a volume of picture data stored in the corresponding input channel buffer memory (6), and
**in that** the output channel control means (8) are configured in such a way that, in the presence of a corresponding activation signal (ACT) from the memory controller (2), they initiate the read-out of a specific volume of picture data from the picture data memory (1) and the storage of this volume of picture data in the corresponding output channel buffer memory (9).

12. The picture data memory device as claimed in claim 11,
**characterized**
**in that** the capacity of each input channel buffer memory (6) and of each output channel buffer memory (9) is greater than the volume of picture data transferred per storage or read-out operation.

13. The picture data memory device as claimed in one of claims 8-12,
**characterized**
**in that** the input channel buffer memory (6) and the output channel buffer memory (8) are in each case formed by a register chain or an SRAM memory.

14. The picture data memory device as claimed in one of claims 8-13,
**characterized**
**in that** the input channel buffer memory (6) and the output channel buffer memory (8) are connected to the picture data memory (1) via a common bus (5).

15. The picture data memory device as claimed in one of the preceding claims,
**characterized**
**in that** at least two of the input and/or output channels (3; 4) are asynchronous with respect to one another.

## Revendications

1. Équipement de mémorisation de données-image, comportant une mémoire centrale de données-image (1) pour la mémorisation de données-image (DATAIN) provenant de plusieurs canaux d'entrée (3) de données-image reliés à la mémoire de données-image (1), la mémoire de données-image (1) étant en outre connectée à plusieurs canaux de sortie (4), de données-image, en vue de la lecture et de la délivrance de données-image mémorisées, pour un traitement ultérieur des données-image délivrées (DATAOUT), et à des moyens de commande de mémoire (2) prévus pour la coordination des différentes opérations de mémorisation des canaux d'entrée (3) des données-image et des différentes opérations de lecture des canaux de sortie (4) des données-image, **caractérisé en ce qu'**un signal propre de synchronisation (SYNCIN ; SYNCOUT) est affecté à chacun des canaux d'entrée (3) de données-image et à chacun des canaux de sortie (4) de données-image, les signaux de synchronisation individuels (SYNCIN ; SYNCOUT) étant amenés aux moyens de commande de mémoire (2), et **en ce que** les moyens de commande de mémoire (2) effectuent la coordination entre les différentes opérations de mémorisation des canaux d'entrée (3) des données-image et les différentes opérations de délivrance des canaux de sortie (4) des données-image, en prenant en compte les signaux de synchronisation spécifiques correspondants (SYNCIN ; SYNCOUT).

2. Équipement de mémorisation de données-image selon la revendication 1, **caractérisé en ce que** la mémoire centrale de données-image (1) est une mémoire SDRAM.

3. Équipement de mémorisation de données-image selon la revendication 1, **caractérisé en ce que** la mémoire centrale de données-image (1) est une mémoire eDRAM.

4. Équipement de mémorisation de données-image selon l'une des revendications qui précèdent, **caractérisé en ce que** les moyens de commande de mémoire (2), en présence de signaux de demande (WRREQ ; RDREQ) venant des différents canaux d'entrée ou de sortie (3 ; 4) en vue de la mémorisation, respectivement de la lecture, de données-image correspondantes, coordonnent et traitent ces demandes selon un schéma de priorités déterminé.

5. Équipement de mémorisation de données-image selon la revendication 4, **caractérisé en ce que** chaque canal d'entrée (3) comprend une mémoire-tampon de canal d'entrée (6) recevant et bufférisant, côté entrée, les données-image (DATAIN) du canal d'entrée (3) correspondant et est reliée, côté sortie, à la mémoire de données-image (1), et **en ce que** des moyens de commande de canal d'entrée (7) sont affectés à chacune des mémoires-tampons de canal d'entrée (6), lesquels moyens de commande génèrent un signal de demande de mémorisation (WRREQ) pour les moyens de commande de mémoire (2), lorsqu'une quantité déterminée de données-image est mémorisée dans la mémoire-tampon spécifique de canal d'entrée (6).

6. Équipement de mémorisation de données-image selon la revendication 4 ou 5, **caractérisé en ce que** chaque canal de sortie (4) comprend une mémoire-tampon de canal de sortie (8) reliée, côté entrée, à la mémoire de données-image (1) et bufférisant les données-image (DATAOUT) du canal de sortie (4) correspondant, reçues par la mémoire de données-image (1), et **en ce que** des moyens de commande de canal de sortie (9) sont affectés à chacune des mémoires-tampons de canal de sortie (8), lesquels moyens de commande génèrent un signal de demande de lecture (RDREQ) pour les moyens de commande de mémoire (2), lorsque la mémoire-tampon de canal de sortie (9) correspondante possède une certaine capacité mémoire libre.

7. Équipement de mémorisation de données-image selon l'une des revendications qui précèdent, **caractérisé en ce qu'**une gamme déterminée d'adresses est affectée à chacun des canaux d'entrée (3) des données-image et à chacun des canaux de sortie (4) des données-image, dans la mémoire centrale de données-image (1).

8. Équipement de mémorisation de données-image selon la revendication 7 et la revendication 5 ou 6, **caractérisé en ce que** les moyens de commande de mémoire (2) comprennent des moyens générateurs d'adresses (11) destinés à la génération de signaux d'adresse spécifiques à chaque canal, et **en ce que** les moyens de commande de mémoire (2) génèrent, pour chaque demande à traiter instantanément selon le schéma de priorités déterminé, un signal d'activation (ACT) pour le canal d'entrée ou de sortie (3 ; 4) correspondant, en vue de l'exécution de l'opération de mémorisation ou de lecture spécifique, et donnent des instructions aux moyens générateurs d'adresses (11) en vue de la production d'un signal d'adresse spécifique pour la mémoire de données-image (1).

9. Équipement de mémorisation de données-image selon la revendication 8, **caractérisé en ce que** les moyens générateurs d'adresses disposent pour chaque canal d'entrée et de sortie (3 ; 4) d'un propre générateur d'adresses (11) et **en ce qu'**à chaque générateur d'adresses (11) est appliqué le signal de synchronisation du canal d'entrée ou de sortie (3 ; 4) correspondant, chacun de ces générateurs d'adresses (11) étant mis sur une adresse d'origine déterminée de la mémoire de données-image (1) en synchronisme avec le signal de synchronisation qui lui est appliqué.

10. Équipement de mémorisation de données-image selon la revendication 8 ou 9, **caractérisé en ce que** la génération des signaux d'adresse est manipulable par les moyens générateurs d'adresses (11) à l'aide de signaux de commande prévus à ces fins et/ou à l'aide d'un paramétrage spécifique.

11. Équipement de mémorisation de données-image selon l'une des revendications 8 à 10, **caractérisé en ce que** les moyens de commande de canal d'entrée (7) sont aménagés de telle manière qu'ils initient dans la mémoire de données-image (1), en présence d'un signal d'activation (ACT) correspondant venant de la commande de mémoire (2), la mémorisation d'une quantité de données-image mémorisée dans la mémoire-tampon (6) correspondante de canal d'entrée, et **en ce que** les moyens de commande de canal de sortie (8) sont aménagés de telle manière qu'ils initient, en présence d'un signal d'activation (ACT) correspondant venant de la commande de mémoire (2), la lecture d'une quantité déterminée de données-image dans la mémoire de données-image (1) et la mémorisation de cette quantité de données-image dans la mémoire-tampon (9) correspondante de canal de sortie.

12. Équipement de mémorisation de données-image selon la revendication 11, **caractérisé en ce que** la capacité de chacune des mémoires-tampons (6) de canal d'entrée et de chacune des mémoires-tampons (9) de canal de sortie est plus grande que la quantité de données-image transmise par opération de mémorisation ou de lecture.

13. Équipement de mémorisation de données-image selon l'une des revendications 8 à 12, **caractérisé en ce que** les mémoires-tampons (6) de canal d'entrée et les mémoires-tampons (8) de canal de sortie sont constituées chacune d'une chaîne de registres ou d'une mémoire SRAM.

14. Équipement de mémorisation de données-image selon l'une des revendications 8 à 13, **caractérisé en ce que** les mémoires-tampons (6) de canal d'entrée et les mémoires-tampons (8) de canal de sortie sont reliées à la mémoire de données-image (1) par l'intermédiaire d'un bus (5) commun.

15. Équipement de mémorisation de données-image selon l'une des revendications qui précèdent, **caractérisé en ce qu'**au moins deux des canaux d'entrée et/ou de sortie (3 ; 4) sont asynchrones l'un par rapport à l'autre.
